Europäisches Patentamt

European Patent Office

Office européen des brevets

(19)

(11) Publication number: **0 248 277**
**A2**

# EUROPEAN PATENT APPLICATION

(21) Application number: 87107363.1

(51) Int. Cl.⁴: **G01D 5/38**

(22) Date of filing: 20.05.87

(30) Priority: 03.06.86 US 870107

(43) Date of publication of application:
09.12.87 Bulletin 87/50

(84) Designated Contracting States:
AT BE CH DE ES FR GB GR IT LI LU NL SE

(71) Applicant: **Optra, Inc.**
**83 Pine Street**
**Peabody Massachusetts 01960(US)**

(72) Inventor: **Wyntjes, Geert**
**70 Prentiss Lane**
**Belmont Massachusetts 02178(US)**
Inventor: **Hercher, Michael**
**216 Pleasant Street**
**Marblehead Massachusetts 01945(US)**

(74) Representative: **Popp, Eugen, Dr. et al**
**MEISSNER, BOLTE & PARTNER**
**Widenmayerstrasse 48 Postfach 86 06 24**
**D-8000 München 86(DE)**

(54) **Two-frequency laser rotation sensor system.**

(57) Disclosed is a rotation sensing system which utilizes a two-frequency laser to provide two laser beams (16a,16b) to illuminate a lateral surface (14) of a rotatable body (12). A beam splitter (20) divides the two-frequency laser into two beams, and the system detects the modulation frequency of the scattered light when the shaft (12) is rotating. This detected modulation frequency is compared to the frequency difference between the two beams (16a,16b). The phase difference between the detected modulation frequency and the difference frequency represents units of displacement of the rotatable body (12).

*FIG. 3*

## TWO-FREQUENCY LASER ROTATION SENSOR SYSTEM

### BACKGROUND OF THE INVENTION

The present invention is directed to a system for sensing rotation and more particularly to a system which can precisely measure shaft rotation with minimum perturbation of the shaft.

Many known instruments require that precise measurements be made of a rotating element of the instrument. Optical shaft encoders have traditionally been provided to enable a measurement of the degree of rotational displacement of a shaft of the rotating element. It has, however, proven to be very difficult to produce very precise and sensitive shaft encoders because such encoders require expensive, large diameter encoder disks to be attached to the shaft.

One possible alternative device for precisely determining the angular position of a shaft is taught by U.S. Patent No. 3,584,959 (Del Carro) which discloses a shaft position encoder which uses an end-on view of the shaft. Such an encoder, however, produces only one or two cycles of phase shift per revolution. Therefore, the sensitivity is limited.

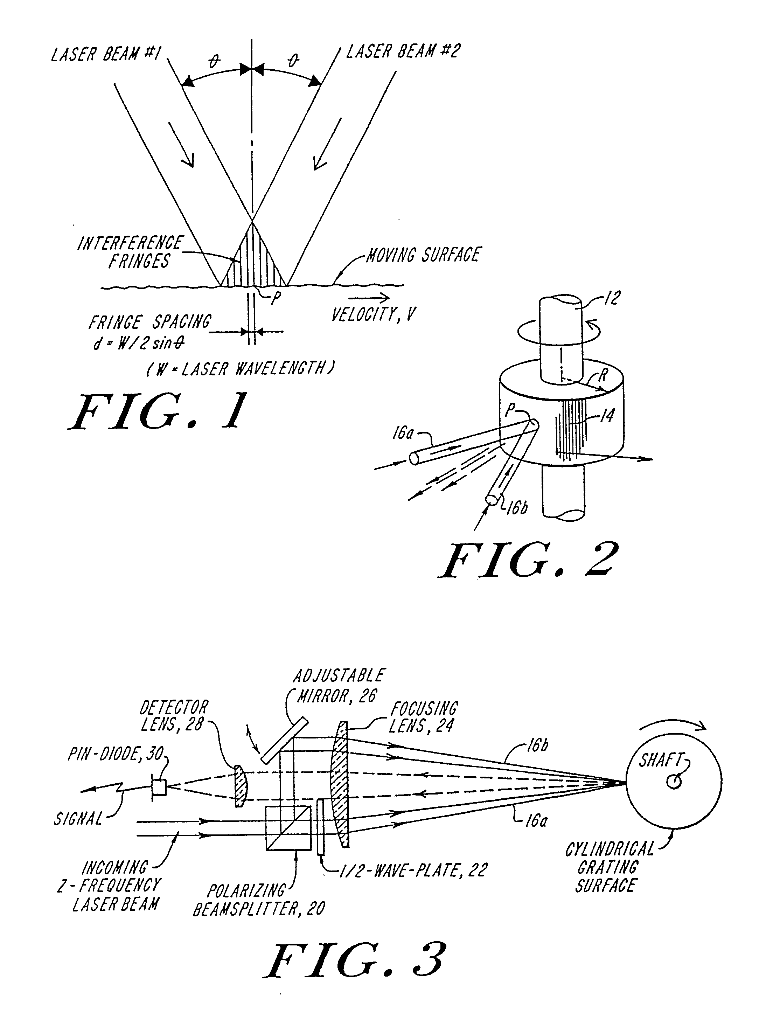

An apparatus for interferometrically detecting lateral motion, shown in Fig. 1, utilizes two laser beams, derived from the same laser. The beams are incident at an angle $\theta$ at a point P on a scattering surface. In the region in which the two beams overlap, an interference fringe pattern is formed as shown. The fringe spacing d is given by:

$$d = w2\sin\theta,$$

where w is the wavelength of the laser. When the surface moves, particles on its surface pass through the spacially modulated intensity pattern and produce a temporally modulated scattered intensity with a frequency f:

$$f = v/d = 2v\sin\theta/w,$$

where v is the velocity component in the plane of the surface and perpendicular to the interference fringes. By detecting this intensity modulation, the lateral velocity of the surface can be monitored, and its displacement can be measured by integrating the velocity (dx = vdt). If the surface has a suitably blazed grating embossed on it, the incident light can be very efficiently scattered in the surface normal direction.

The apparatus described above for interferometrically detecting lateral motion suffers from several defects. In particular, low frequency intensity modulations of the laser--or of the detector current--can be misinterpreted as surface displacements. The apparatus can also not sense the direction of the motion.

It is therefore a principal object of the present invention to provide an apparatus for precisely measuring rotation of a rotating body.

It is a further object of the present invention to precisely measure shaft rotation of a shaft with minimum perturbation of the shaft.

Still another object of the present invention is to provide an apparatus for precisely measuring shaft rotation which does not require expensive, large-diameter encoder disks.

Yet another object of the present invention is to provide a method of detecting lateral motion which can sense the direction of the motion and is highly reliable and sensitive.

### SUMMARY OF THE INVENTION

One embodiment of the rotation sensing system of the present invention utilizes a cylindrical grating, which is preferably replicated on the surface of a shaft of a rotating body. An optical head functions to illuminate the grating with superposed laser beams, and the optical head detects light reflected and diffracted by the grating. A two-frequency laser provides the required illumination with a beam splitter separating the two-frequency laser beam into two beams. The system detects the modulation frequency of the scattered light when the shaft is rotating, and this detected modulation frequency is compared to the frequency difference in the two beams. The phase difference between the two-frequency signals represents units of distance movement of the rotating body.

In an alternate embodiment, the rotation sensing system illuminates the surface of the shaft itself with two laser beams of different frequencies, and the displacement of the shaft is detected in the manner described above. These and other objects and features of the present invention will be more fully understood from the following detailed description which should be read in light of the accompanying drawings in which corresponding reference numerals refer to corresponding parts throughout the several views.


## BRIEF DESCRIPTION OF THE DRAWINGS

Fig. 1 is a diagrammatic view of a surface whose lateral motion is being detected by a single frequency laser interferometer;

Fig. 2 is a perspective view of a shaft of the system of the present invention with a grating illuminated by two laser beams;

Fig. 3 is a schematic view of the components of the two-frequency laser interferometer of the present invention;

Fig. 4 is a diagrammatic view of a surface whose motion is being detected by the two-frequency laser interferometer of the present invention;

Fig. 5 is a simple diagrammatic view of a method of measuring rotation about an unknown axis using the two-frequency laser interferometer shown in Fig. 3.


## DETAILED DESCRIPTION OF THE PREFERRED EMBODIMENTS

Referring to the embodiment of the rotation sensor system of the present invention shown in Fig. 2, there is shown a rotating shaft 12 of a rotating body (not shown). In order to precisely measure the rotation of the shaft 12, the surface of the shaft 12 includes a cylindrical grating 14 which is preferably replicated onto the shaft surface (either onto part of the circumferential surface or all around the entire circumferential surface). The grating 14 is illuminated by laser beams 16a, 16b fed through optical fibers 18a, 18b to the surface of the shaft 12 containing the grating 14.

In order to eliminate the shortcomings of known motion sensors due to low frequency intensity modulations of the laser being misinterpreted as surface displacements and the inability of such devices to sense the direction of the motion, the apparatus of the present invention incorporates a two-frequency laser, which is preferably a two-frequency HeNe laser (such as the Optralite manufactured by Optra, Inc. of Peabody, Massachusetts). The output from the two-frequency HeNe laser is comprised of two superposed beams which are orthoganally polarized, and which differ in frequency by an amount on the order of anywhere from 200 to 2,000 KHz (with a frequency of precisely 250.00 KHz being the preferred difference frequency).

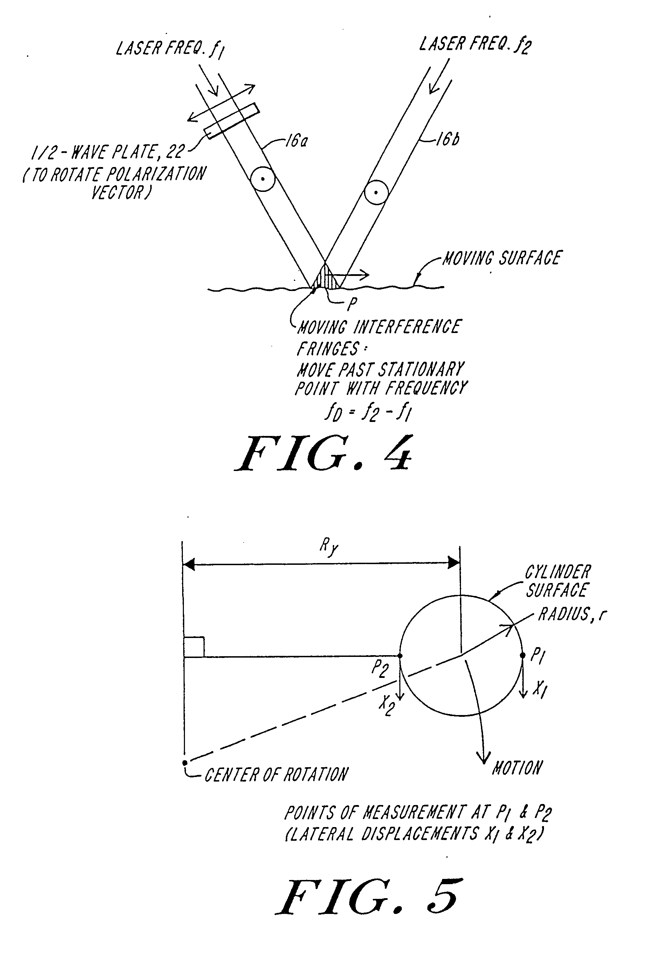

As shown in Fig. 3, the apparatus of the present invention for detecting lateral motion with a two-frequency laser utilizes a polarizing beam splitter 20 to separate the two-frequency components and provide two beams 16a, 16b which are superposed on the surface of the shaft 12. One beam 16a passes through a 1/2 wave plate 22 which is provided to rotate the polarization vector, before passing through a focusing lens 24. The other beam 16b is directed to an adjustable mirror 26 which directs the beam 16b through the focusing lens 24 so that the beam 16b emanates from a location spaced from the location where the beam 16a emanates. The reflected light passes through a detector lens 28 to a PIN diode 30 that provides a signal representing the reflected light.

Referring to Fig. 4, an interference fringe pattern is formed in the region of beam overlap, but because of the frequency difference between the two laser beams 16a, 16b, the fringes are not stationary. The fringes move in a direction normal to the fringes and pass by fixed points on the surface at a frequency $f_D = f2-f1$ where f2 and f1 are the frequencies of the two laser beams (the fringes move towards the laser beam with the lower frequency).

When the surface is stationary, the scattered light is modulated at the laser difference frequency. When the surface moves, scattered light is modulated at the laser difference frequency plus or minus a frequency shift due, the motion of the surface such that:

$$f = f_D \pm (2v\sin\theta)/w,$$

where the sign on the right side of the equation depends on whether the surface is moving against or with the fringe motion.

3

The apparatus described above provides advantages over prior art systems insofar as the direction of the motion is unambiguously sensed and all of the detected frequencies are in the vicinity of the laser difference frequency. As a result, low frequency laser intensity fluctuations are thus virtually eliminated as a source of noise in the measurement. Moreover, the motion of the surface can be very easily monitored by detecting the phase difference between the laser difference frequency (detected at the rear of the laser) and the detected modulation frequency of the light scattered by the surface. For each distance d ($d = w/2\sin\theta$) the surface moves, this phase difference is incremented or decremented by one full cycle. Known phase meters are capable of easily resolving better than a 0.001 cycle with measurement bandwidths in excess of 20 KHz. Using standard 1 mwatt two-frequency lasers, S/N ratios of better than 1000 can be easily realized.

EXAMPLE 1

Two laser beams are positioned incident at an angle of 30 degrees to the surface with the fringe spacing being one wavelength or 0.633 microns (24.9 microinches). A surface velocity of one cm/sec produces a frequency shift in the modulation of the scattered light (nominally at 250.00 KHz for a stationary surface) of ± 2v/d, or 15.8 KHz. With a phase meter set to resolve 1/128th of a cycle (such as the Optrameter manufactured by Optra, Inc. of Peabody, Massachusetts), the measurement precision is w/128 or 0.005 microns (0.19 micro inch). By properly choosing the angle between the laser beams, the fringe spacing can be adjusted to suit the maximum velocity and the desired measurement precision.

In order to infer an angular velocity from a measurement of transverse displacement, it is only necessary to note the displacement of the point of measurement from the axis of rotation. Fig. 2 shows the geometry of the laser shaft encoder of the present invention. The cylindrical grating 14 is attached to the shaft 12 and the tangential velocity of the grating surface is R(dA/dt), where dA/dt is the angular velocity of the shaft (radians/sec) and R is the cylindrical radius. The relationship between the detected phase difference (measured by the phase meter) and the angle A through which the shift has rotated is given by:

phase difference = AR/d = $2AR\sin\theta/w$,

where A is measured in radians and the phase difference is measured by cycles. For a 30 degree angle of incidence and a 1 cm grating radius, there is a 15.8 cycle phase difference for each milliradian of rotation, or 275.7 cycles per degree.

The apparatus of the present invention described above assumes a perfect bearing, i.e. one whose axis of rotation coincides with the grating cylinder axis. Referring to Fig. 5, the apparatus of the present invention can also accurately measure an unknown axis. By making measurements of lateral motion (in the x direction) at two points, P1 and P2, both the angular rotation A and the Y-component of the distance to the center of rotation, Ry, can be inferred. The situation shown in Fig. 5 where P1 and P2 are diametrically opposed on a circle of radius r, the lateral displacements X1 and X2 are given by:

X1 = A(Ry + r), and X2 = A(Ry-r),

where the angle A is assumed to be small. From these two equations both A and Ry can be determined as follows:

A = (X2-X1)/2r, and Ry = (X2 + X1)/2r,

A second diametrically opposed system would make similar measurements at two points.

EXAMPLE 2

The system described in this example provides specific parameters for the apparatus shown in Fig. 3 so as to provide a highly compact geometry for monitoring shaft rotation. This apparatus affords an angular resolution of one microradian with a ± 6 degree measurement range. The laser beam can be brought to the measurement head either by mirrors or via single-mode optical fibers (the precise alignment of the laser beam measurement head is not critical).

In the apparatus of this Example, a lightweight, balanced and well centered aluminum disk is attached to the motor shaft. This disk could be an integral part of the mirror itself. The cylindrical grating is fabricated on a segment of the edge of the disk, and the two laser beams intersect at a small area on the grating segment. The grating cylinder radius is 1.5 cm, the laser beam angle of incidence is 22.3 degrees, the laser fringe spacing is 0.83 microns, the grating spacing is 1.67 microns, the laser beam diameter is approximately 1 mm, the phase meter resolution is 1/64 cycles (0.015625 cycle) and the dynamic range is 18 bits.

In the apparatus shown in Fig. 3, a 12 degree rotation of the motor shaft would cause a point on the grating surface to move a distance of 0.314 cm or 3770 fringes. A one microradian angular precision over 12 degrees corresponds to one part in $2.1 \times 10^5$. To attain this precision over 3770 fringes requires a fringe measuring precision of 0.018 fringe or better. This apparatus is thus designed for precision of 1/64 fringe a dynamic range of $2.62 \times 10^5$ (18 bits) which corresponds to a ± 0.8 microradian precision and a 13 degree measurement range.

In the apparatus of Example 2 described above, the modulation frequency shifts for various shaft speeds are as shown in the table below.

| Shaft Speed (rad/sec) | Surface Velocity (cm/sec) | Frequency Shift (KHz) |
|---|---|---|
| 0.1 | 0.15 | 1.798 |
| 1.0 | 1.5 | 17.980 |
| 10.0 | 15.0 | 179.800 |
| 100.0 | 150.0 | 1798.000 |

Using a standard two-frequency laser with a 250 KHz difference frequency, the maximum practical shaft speed would be approximately 13 rad/sec. A higher value for the maximum shaft speed could be realized by using a higher laser difference frequency and/or a larger fringe spacing (i.e. a more acute angle between the laser beams).

The cylindrical grating laser rotation sensor of the present invention provides several advantages over known rotation sensors. First of all, negligible mass is added to the shaft. Very high precision and accuracy can be achieved with relatively small shaft diameters (e.g. better than 1 microradian precision has been achieved with a 1.5 cm shaft diameter). The dynamic range of the measurement depends on the data processing module and not on the optical hardware. Furthermore, the measurement system is compact and potentially inexpensive compared to alternative techniques. Moreover, by using a two-frequency laser, signals are detected in the vicinity of 250 KHz, thereby eliminating laser intensity fluctuations as a source of noise and simplifying the task of sensing the direction of shaft rotation.

The foregoing invention has been described with reference to its preferred embodiments. Various alterations and modifications will occur to those skilled in the art. For example, the system of the present invention may be constructed without any grating on the surface of the rotatable shaft as the laser light will cause interference fringe patterns on a surface of the moving object even if a grating is not employed. Furthermore, the grating, if employed, need not be replicated onto a cylindrical surface. These and other such alterations and modifications are intended to fall within the scope of the appended claims.

## Claims

1. A rotational displacement sensor system comprising:
means for providing two laser beams (16a,16b) of different frequencies superposed on a lateral surface of a rotatable member, said two laser beams being separated from each other and being incident at an angle $\theta$ at a point(P)on said lateral surface;
means for detecting the modulation frequency of light scattered by said lateral surface;
means for processing said detected modulation frequency to determine the rotational displacement of said rotatable member.

2. The rotational displacement sensor system of claim 1 wherein said rotating member is a rotatable cylindrical shaft (12).

3. The rotational displacement sensor system of claim 1 wherein said means for providing two laser beams comprises:
a two-frequency laser, the two frequencies of said laser differing by an amount on the order of 200 to 2000 KHz;
means (20) for polarizing and splitting a laser beam from said two-frequency laser, one beam (16a) of said split laser beam being directed through a focusing lens (24) to a point P on said lateral surface, and another beam (16b) of said split beam being directed towards an adjustable mirror (26) before being directed by said adjustable mirror through said focusing lens (24) to the point P on said lateral surface.

4. The rotational displacement sensor system of claim 3 wherein said two-frequency laser provides two beams (16a,16b) differing in frequency by precisely 250 KHz.

5. The rotational displacement sensor system of claim 1 wherein said means for detecting the modulation frequency of light scattered by said lateral surface comprises a detector (28) lens and a PIN-diode which (30) receives light passed through the detector lens (28) and provides a signal representing the detected modulation frequency.

6. The rotational displacement sensor system of claim 1 wherein said means for detecting the modulation frequency of light scattered by said lateral surface comprises:

means for detecting the modulation frequency of light scattered by said lateral surface when said rotatable member is stationary so as to verify the frequency difference $F_D$ between the two laser beams (16a,16b);

means for detecting the modulation frequency F when said rotatable member is set in motion.

7. The rotational displacement sensor system of claim 1 wherein the modulation frequency shift $F = F_D \pm (2v \sin \theta)/w$ where w is the wavelength of the laser, v is the velocity component in the plane of the surface, and $\theta$ is the angle of incidence of the laser relative to the lateral surface.

8. The rotational displacement sensor system of claim 6 wherein said means for processing said detected modulation frequency comprises means for detecting the phase difference between the laser difference frequency and said detected modulation frequency when said rotatable member is in motion, one full cycle of said phase difference representing one unit of distance d where $d = w/2\theta$, where w is the wavelength of the laser and $\theta$ is the angle of incidence of the laser beam relative to said lateral surface.

9. The rotational displacement sensor system of claim 1 further comprising means for determining the angular velocity of the rotating member utilizing a measurement of rotational displacement and the displacement of the point of measurement from the axis of rotation.

10. A rotational displacement sensor system comprising:

a cylindrical grating (14) replicated on a lateral surface of a rotatable member (12);

means for providing two laser beams (16a,16b) of different frequencies superposed on said cylindrical grating (14), said two laser beams (16a,16b) being separated from each other and being incident at an angle $\theta$ at a point P on said cylindrical grating (14);

means for detecting the modulation frequency of light scattered by said cylindrical grating (14);

means for processing said detected modulation frequency to determine the rotational displacement of the rotatable member (12);

11. The rotational displacement sensor system of claim 10 wherein said rotatable member is a rotating cylindrical shaft (12);

12. The rotational displacement sensor system of claim 10 wherein said means for providing two laser beams comprises:

a two-frequency laser, the two frequencies of said laser differing by an amount on the order of 200 to 2000 KHz;

means for polarizing and splitting a laser beam from said two-frequency laser, one beam (16a) of said split laser beam being directed through a focusing lens (24) to the point P on said cylindrical grating (14) and another beam (16b) of said split beam being directed towards an adjustable mirror (26) before being directed by said adjustable mirror(26) through said focusing lens (24) to the point P on said cylindrical grating (14).

13. The rotational displacement sensor system of claim 12 wherein said two-frequency laser provides two beams differing in frequency by precisely 250 KHz.

14. The rotational displacement sensor system of claim 10 wherein said means for detecting the modulation frequency of light scattered by said cylindrical grating (14) comprises a detector lens (28) and a PIN-diode (30) which receives light passed through the detector lens and provides a signal representing the detected modulation frequency.

15. A method of determining the rotational displacement of a rotatable body, said method comprising the steps of:

providing a cylindrical grating replicated on a lateral surface of the rotatable body;

superposing two laser beams of different frequencies on said cylindrical grating, said two beams emanating from different locations and being incident at an angle $\theta$ at a point P on said cylindrical grating;

detecting the modulation frequency of light scattered by said cylindrical grating;

processing said detected modulation frequency to determine the rotational displacement of the rotatable body.

16. The method of determining the rotational displacement of a rotatable body of claim 15 wherein said step of superposing two laser beams of different frequencies comprises:

providing a two-frequency laser having two frequencies which differ by an amount on the order of 200 to 2000 KHz;

polarizing and splitting a laser beam produced by said two-frequency laser, one beam of said split laser beam being directed through a focusing lens to the point P on said cylindrical grating and another beam of said split beam being directed towards an adjustable mirror before directed by said adjustable mirror through said focusing lens to the point P on said cylindrical grating.

17. The method of determining the rotational displacement of a rotatable body of claim 15 wherein said step of detecting the modulation frequency comprises the steps of:

detecting the modulation frequency of light scattered by said cylindrical grating when said rotatable body is stationary so as to verify the frequency difference $F_D$ between the two laser beams;

detecting the modulation frequency F when said rotatable body is set in motion.

18. The method of determining the rotational displacement of a rotating body of claim 17 wherein the modulation frequency shift F equals $F_D \pm (2v \sin\theta)/w$ where w is the wavelength of the laser, v is the velocity component in the plane of the surface, and $\theta$ is the angle of incidence of the laser beam relative to the cylindrical grating.

19. The method of determining the rotational displacement of a rotatable body of claim 17 wherein said step of processing said detected modulation frequency comprises the steps of:

detecting the phase difference between the laser difference frequency and said detected modulation frequency when said rotating body is in motion, one full cycle of said phase difference representing one unit of distance d where $d = w/2\sin\theta$, where w is the wavelength of the laser and $\theta$ is the angle of incidence of the laser beam relative to the cylindrical grating.

20. The method of determining the rotational displacement of a rotating body of claim 15 further comprising the step of utilizing a measurement of rotational displacement and the displacement of the point of measurement from the axis of rotation to determine the angular velocity of the rotating body.

**FIG. 1**

LASER BEAM #1

LASER BEAM #2

INTERFERENCE FRINGES

MOVING SURFACE

FRINGE SPACING
$d = W/2 \sin\theta$

( W = LASER WAVELENGTH )

VELOCITY, V

**FIG. 2**

**FIG. 3**

ADJUSTABLE MIRROR, 26

DETECTOR LENS, 28

FOCUSING LENS, 24

PIN-DIODE, 30

SIGNAL

INCOMING Z-FREQUENCY LASER BEAM

POLARIZING BEAMSPLITTER, 20

1/2-WAVE-PLATE, 22

SHAFT

CYLINDRICAL GRATING SURFACE

LASER FREQ. $f_1$

LASER FREQ. $f_2$

1/2-WAVE PLATE, 22
(TO ROTATE POLARIZATION
VECTOR)

16a

16b

MOVING SURFACE

P

MOVING INTERFERENCE
FRINGES :
MOVE PAST STATIONARY
POINT WITH FREQUENCY
$f_D = f_2 - f_1$

# FIG. 4

$R_y$

CYLINDER
SURFACE

RADIUS, $r$

$P_2$

$P_1$

$X_2$

$X_1$

MOTION

CENTER OF ROTATION

POINTS OF MEASUREMENT AT $P_1$ & $P_2$
(LATERAL DISPLACEMENTS $X_1$ & $X_2$)

# FIG. 5